# EUROPEAN PATENT APPLICATION

(11) **EP 4 726 630 A1**
(43) Date of publication of application: **15.04.2026**
(21) Application number: 25205672.6
(22) Date of filing: 30.09.2025
(51) Int. Cl.: G06Q 20/40, G06F 21/32

(54) **METHODS AND SYSTEMS FOR ENHANCING DETECTION OF FRAUDULENT AUTHENTICATION TRANSACTIONS**

(30) Priority: 08.10.2024 US 202418909245
(71) Applicant: Daon Technology, Douglas Isle of Man IM1 2LN (GB)
(72) Inventor: PEIRCE, Michael, Dublin (IE)
(74) Representative: Murgitroyd & Company

(57) **Abstract**

A method for enhancing the detection of fraudulent authentication transactions is provided that includes capturing, by an electronic device operating at least one trained large language model, data of a biometric modality of a user as part of an authentication transaction. Moreover, the method includes generating items of metadata relevant to the authentication transaction, determining the similarity between each item of metadata and corresponding record items of metadata associated with the user, and determining whether the items of metadata are within a first expected range. In response to determining the items of metadata are within the first expected range, the method determines the similarity between each item of metadata and corresponding record items of metadata associated with fraudulent authentication transactions and determines whether the items of metadata are outside a second expected range. In response to determining the items of metadata are outside the second expected range, the authentication transaction is determined to be fraudulent.

## Description

### BACKGROUND OF THE INVENTION

This invention relates generally to authentication transactions, and more particularly, to methods and systems for enhancing detection of fraudulent authentication transactions.

People conduct transactions with service providers in person and remotely over the Internet. Network-based transactions conducted over the Internet may involve, for example, purchasing items from a merchant website or accessing confidential information from a website. Service providers who own and operate such websites typically require successfully authenticating a person during an authentication transaction before allowing him or her to conduct a desired network-based transaction.

During, for example, authentication transactions, enrolment transactions, and onboarding transactions service providers typically require individuals to upload an image of his or her identity document, for example, a driver's license or a passport and a claim of identity. The uploaded images are typically analyzed to determine whether the identity document in the uploaded image is authentic, jurisdictionally accurate, and unexpired.

Imposters have been known to impersonate people by providing a false claim of identity supported by fraudulent biometric modality data to deceive an entity into concluding the imposter is the person he or she claims to be. For example, imposters have been known to use artificial intelligence (AI) and deep fake technologies to generate fraudulent biometric modality data, for example, synthetic speech, videos, and images that can be difficult to distinguish from genuine human biometric modality data. As a result, fraudulent biometric data may be a threat to security systems that use biometric modality data to verify identities. For example, fraudulent biometric modality data may increase the risks of successfully perpetuating identity fraud and increase the risk of unauthorized access to confidential information stored on computer systems as well as the computer systems themselves.

Security systems have been known to fail to identify AI-generated biometric modality data. Consequently, there is a need for more advanced detection mechanisms that can enhance the detection of AI-generated biometric modality data and thus enhance the detection of fraudulent authentication transactions.

Thus, it would be advantageous and an improvement over the relevant technology to provide a method, an electronic device and a non-transitory computer-readable recording medium capable of detecting anomalous patterns in, for example, biometric data, electronic documents, and metadata to enhance detection of fraudulent authentication transactions to enhance the accuracy and trustworthiness of biometric authentication transaction results.

### BRIEF DESCRIPTION OF THE INVENTION

In one aspect, a method for enhancing the detection of fraudulent authentication transactions comprising the steps of capturing, by an electronic device operating at least one trained large language model, data of a biometric modality of a user as part of an authentication transaction, generating items of metadata relevant to the authentication transaction, determining the similarity between each item of metadata and corresponding record items of metadata associated with the user, and determining whether the items of metadata are within a first expected range.

In response to determining the items of metadata are within the first expected range, the method determines the similarity between each item of metadata and corresponding record items of metadata associated with fraudulent authentication transactions. Next, the method determines whether the items of metadata are outside a second expected range. In response to determining the items of metadata are outside the second expected range, the authentication transaction is determined to be fraudulent.

In one embodiment, the step of determining the similarity between each item of metadata and corresponding record items of metadata associated with the user includes comparing each item of metadata against corresponding record items of metadata associated with the user.

In another embodiment, the step of determining whether the items of metadata are within the first expected range includes calculating a similarity score for each comparison, combining the similarity scores to create a combined similarity score, and comparing the combined similarity score against a first threshold value. In in response to determining the combined similarity score satisfies the first threshold value, determining that the items of metadata are within the first expected range.

In yet another embodiment, the step of determining the similarity between each item of metadata and corresponding record items of metadata associated with fraudulent authentication transactions includes comparing each item of metadata against corresponding record items of metadata associated with fraudulent authentication transactions.

In yet another embodiment, the step of determining whether the items of metadata are outside the second expected range includes calculating a similarity score for each comparison, combining the similarity scores to create a total similarity score, and comparing the total similarity score against a second threshold value. In response to determining the total similarity score satisfies the second threshold value, the method includes determining that the items of metadata are outside the second expected range.

In yet another embodiment, the method includes capturing, by the electronic device, an image of a document associated with the user as part of the authentication transaction. The document image includes a facial image of the user. Moreover, the method includes generating items of metadata for the document image relevant to the authentication transaction and conducting a biometric authentication transaction based on the facial image. In response to successfully authenticating the user, the method determines whether the document in the image is genuine.

Another aspect of the present disclosure provides a non-transitory computer-readable recording medium in an electronic device capable of enhancing the detection of fraudulent authentication transactions. The non-transitory computer-readable recording medium stores instructions which when executed by a hardware processor performs the steps of the methods described above.

In another aspect, an electronic device for enhancing the detection of fraudulent authentication transactions is provided that includes a processor and a memory. The memory is configured to store data and the electronic device is associated with a network. The memory is also in communication with the processor and has instructions stored thereon which, when read and executed by the processor, cause the electronic device to capture data of a biometric modality of a user while conducting an authentication transaction and to generate items of metadata as a result of conducting the authentication transaction. The instructions when read and executed by the processor, further cause the electronic device to determine the similarity between each item of metadata and corresponding record items of metadata associated with the user, and determine whether the items of metadata are within a first expected range.

In response to determining the items of metadata are within the first expected range, the instructions when read and executed by the processor further cause the electronic device to determine the similarity between each item of metadata and corresponding record items of metadata associated with fraudulent authentication transactions, and to determine whether the items of metadata are outside a second expected range. In response to determining the items of metadata are outside the second expected range, the instructions when read and executed by the processor further cause the electronic device to determine the authentication transaction is fraudulent.

In one embodiment, the instructions when read and executed by the processor cause the electronic device to compare each item of metadata against corresponding record items of metadata associated with the user.

In another embodiment, the instructions when read and executed by the processor, further cause the electronic device to calculate a similarity score for each comparison, combine the similarity scores to create a combined similarity score, and compare the combined similarity score against a first threshold value. In response to determining the composite similarity score satisfies the first threshold value, the instructions when read and executed by the processor further cause the electronic device to determine the items of metadata are within the first expected range.

In yet another embodiment, the instructions when read and executed by the processor, further cause the electronic device to compare each item of metadata against corresponding record items of metadata associated with fraudulent authentication transactions.

In yet another embodiment, the instructions when read and executed by the processor further cause the electronic device to calculate a similarity score for each comparison, combine the similarity scores to create a total similarity score, and compare the total similarity score against a second threshold value. In response to determining the total similarity score satisfies the second threshold value, the instructions when read and executed by the processor further cause the electronic device to determine that the items of metadata are outside the second expected range.

In yet another embodiment, the instructions when read and executed by the processor further cause the electronic device to capture an image of a document associated with the user while conducting the authentication transaction and to generate items of metadata for the captured document image as a result of conducting the authentication transaction. The document includes a facial image of the user. The instructions when read and executed by the processor further cause the electronic device to conduct an authentication transaction based on the facial image, and in response to successfully authenticating the user cause the electronic device to determine whether the document in the image is genuine.

Accordingly there is provided a method, a system, and a computer program as detailed in the claims that follow.

### BRIEF DESCRIPTION OF THE DRAWINGS

Figure 1 is a schematic diagram of an example computing system for enhancing detection of fraudulent authentication transactions according to an embodiment of the present disclosure;
Figure 2 is a more detailed schematic diagram illustrating an example electronic device in the system of Figure 1;
Figure 3 is a side view of a person operating the example electronic device;
Figure 4 is a diagram illustrating an example identity document;
Figure 5 is a diagram illustrating a table including example items of metadata;
Figure 6 is a flowchart illustrating an example method and algorithm for enhancing detection of fraudulent authentication transactions according to an embodiment of the present disclosure;
Figure 7 is a flowchart illustrating another example method and algorithm for enhancing detection of fraudulent authentication transactions according to an embodiment of the present disclosure; and
Figure 8 is a flowchart illustrating yet another example method and algorithm for enhancing detection of fraudulent authentication transactions according to an embodiment of the present disclosure.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples and not for the purpose of limiting the present disclosure as defined by the appended claims and their equivalents. The words and phrases used in the following description are merely used to enable a clear and consistent understanding of the present disclosure. In addition, descriptions of well-known structures, functions, and configurations may have been omitted for clarity and conciseness. Those of ordinary skill in the art will recognize that various changes and modifications of the example embodiments described herein can be made without departing from the spirit and scope of the present disclosure.

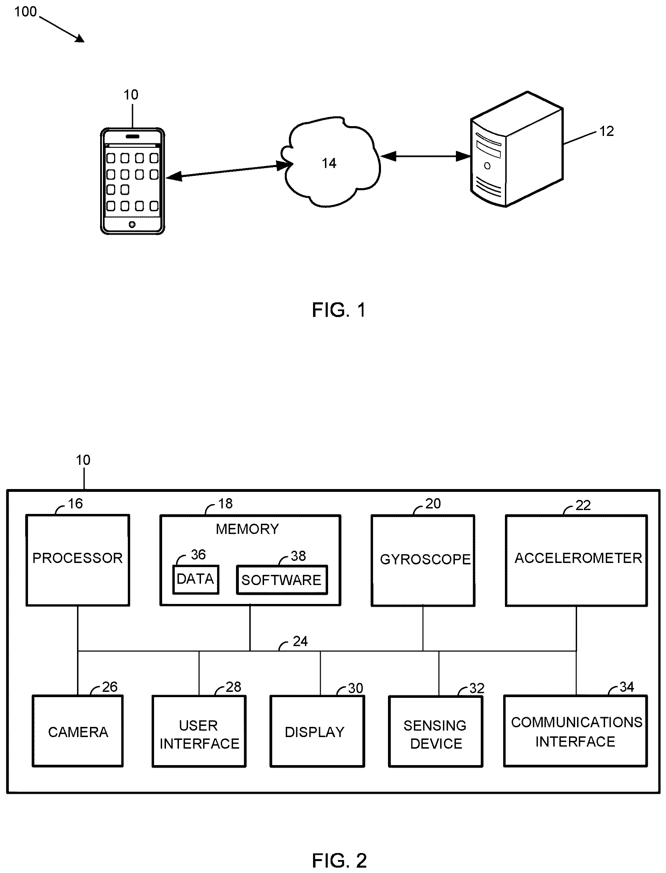

Figure 1 is a schematic diagram of an example computing system 100 for enhancing detection of fraudulent authentication transactions according to an embodiment of the present disclosure. As shown in Figure 1, the main elements of the system 100 include an electronic device 10 and a server 12 communicatively connected via a network 14.

In Figure 1, the electronic device 10 can be any electronic device capable of at least downloading applications over the Internet, running applications, capturing and storing data temporarily and/or permanently, and otherwise performing any and all functions, methods and/or algorithms described herein by any computer, computer system, server or electronic device included in the system 100. Moreover, the electronic device 10 may alternatively be any type of server or computer implemented as a network server or network computer. Other examples of the electronic device 10 include, but are not limited to, a cellular phone, any wireless hand-held consumer electronic device, a smart phone, a tablet computer, a phablet computer, a laptop computer, and a personal computer (PC).

The electronic device 10 may be associated with a single person who operates the device. The person who is associated with and operates the electronic device 10 may be referred to herein as a user. Additionally, a user may be any person being authenticated, for example, during an authentication transaction.

The server 12 can be, for example, any type of server or computer implemented as a network server or network computer. The electronic device 10 and server 12 may alternatively be referred to as information systems. The server 12 may also alternatively be referred to as an electronic device.

The network 14 may be implemented as a 5G communications network. Alternatively, the network 14 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 14 may also be any type of wired network or a combination of wired and wireless networks.

It is contemplated by the present disclosure that the number of electronic devices 10 and servers 12 is not limited to the number shown in the system 100. Rather, any number of electronic devices 10 and servers 12 may be included in the system 100.

Figure 2 is a diagram of the example electronic device 10 used for enhancing detection of fraudulent authentication transactions according to an embodiment of the present disclosure. The electronic device 10 includes components such as, but not limited to, one or more processors 16, a memory 18, a gyroscope 20, one or more accelerometers 22, a bus 24, a camera 26, a user interface 28, a display 30, a sensing device 32 and a communications interface 34. General communication between the components in the electronic device 10 is provided via the bus 24.

In Figure 2, the electronic device 10 can be any electronic device capable of at least downloading applications over the Internet, running applications, capturing and storing data temporarily and/or permanently, and otherwise performing any and all functions, methods and/or algorithms described herein as being performed by any computer, computer system, server or electronic device capable of communicating with the electronic device 10. For example, the electronic device 10 may be any type of server or computer implemented as a network server or network computer. Other examples of the electronic device 10 include, but are not limited to, a cellular phone, any wireless hand-held consumer electronic device, a smart phone, a tablet computer, a phablet computer, a laptop computer, and a personal computer (PC). It is contemplated by the present disclosure that the electronic device 10 may not include some components, for example, the gyroscope 20 and accelerometer 22 in some embodiments.

The processor 16 executes instructions, or computer programs, stored in the memory 18. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 18 may be any non-transitory computer-readable recording medium. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 18 may be used to store any type of data 36, for example, data records of users. Each data record is typically for a respective user. The data record for each user may include data such as, but not limited to, record biometric modality data, record biometric templates, items of metadata associated with the record biometric modality data, items of metadata associated with identity documents issued to the user, images of identity documents issued to the user, record metadata associated with previously conducted fraudulent transactions, and personal data of the user. A biometric template can be any type of mathematical representation of biometric modality data. Biometric modality data is the data of a biometric modality of a person. Weights to be assigned to different items of metadata may also be stored in the memory 18.

Biometric modalities include, but are not limited to, voice, face, finger, iris, palm, and any combination of these or other modalities. Biometric modality data is the data of a biometric modality of a person. As used herein, capture means to record data temporarily or permanently, for example, biometric modality data of a person. Biometric modality data may be in any form including, but not limited to, image data and audio data. Image data may be a digital image, a sequence of digital images, or a video. Each digital image is included in a frame. The biometric modality data in the data record may be processed to generate at least one biometric modality template. For the methods and systems described herein, the biometric modality is face biometric data captured as an image. Alternatively, the biometric modality may be for any biometric modality or any combination of biometric modalities that may be captured as an image.

Biometric modality data may be captured in any manner. For face biometric data, the camera 26 may record image data of the face of a user by taking one or more photographs or digital images of the user, or by taking a video of the user. The camera 26 may record a sequence of digital images at irregular or regular intervals. A video is an example of a sequence of digital images being captured at a regular interval. Captured biometric modality data may be temporarily or permanently recorded in the electronic device 10 or in any device capable of communicating with the electronic device 10. Alternatively, the biometric modality data may not be stored. The record biometric data is raw biometric data processed to generate at least one record biometric template that may be used to verify the identity of a user.

The term "personal data" as used herein includes any demographic information regarding a user as well as contact information pertinent to the user. Such demographic information includes, but is not limited to, a user's name, age, date of birth, street address, email address, citizenship, marital status, and contact information. Contact information can include devices and methods for contacting the user.

Additionally, the memory 18 can be used to store any type of software 38. As used herein, the term "software" is intended to encompass an executable computer program that exists permanently or temporarily on any non-transitory computer-readable recordable medium that causes the electronic device 10 to perform at least a portion of the functions, methods, and/or algorithms described herein. Such functions include, but are not limited to, calculating feature values, feature vectors, and confidence scores. Application programs are software and include, but are not limited to, operating systems, Internet browser applications, authentication applications, trained large language models, and any special computer program that manages the relationship between application software and any suitable variety of hardware that helps to make-up a computer system or computing environment. The software may also include computer programs that implement buffers and use RAM to store temporary data.

Authentication applications enable the electronic device 10 to conduct user verification and identification (1:N) transactions with any type of authentication data, where "N" is the size of a gallery of data to be searched and candidates refers to the potential matches that are detected.

Trained large language models (LLM) can facilitate identifying patterns and statistical irregularities in text. Thus, encoding metadata and analyzing the encoded metadata with an LLM facilitates detecting deviations in the encoded text which facilitates detecting fraudulent data. Transactions that depend on fraudulent data are themselves fraudulent. Examples of such dependent transactions include, but are not limited to, authentication transactions and onboarding transactions.

The LLM may be trained with data including, but not limited to, text from identity documents, data associated with fraudulent transactions, and historical authentication transaction metadata. Training with text from identity documents facilitates detecting fraudulent identity documents uploaded, for example, during authentication transactions. Training with data associated with fraudulent transactions facilitates detecting fraudulent data and thus fraudulent transactions. Training with historical authentication transaction metadata facilitates detecting inconsistencies that may be indicative of fraud.

The LLM may be designed and trained to explain why an anomaly was detected and indicate the information identified as anomalous. For example, a user who typically passes a global face authentication threshold in the 95^{th} percentile may be successfully authenticated in the 85^{th} percentile during an authentication transaction. The difference between the 85^{th} and 95^{th} percentiles may be an anomaly indicative of fraud. Thus, the difference should be further investigated. A set of prompts may be designed to extract information about why an anomaly was detected and the information identified as anomalous. Prompts may be natural language questions. An example prompt may require comparing authentication metadata against historical authentication metadata for the user and reporting if the differences may be indicative of fraud. The prompt could also request reasoning behind a decision made by the LLM.

The LLM may also be trained to analyze text-based time series data of a desired transaction. The text-based time series data represents the flow of a desired transaction. As a result of such training, the LLM should understand the typical flow of transactions within a specific domain and thus be able to identify sudden spikes and dips in certain transaction metadata and themes that may indicate a transaction is fraudulent. A domain can be, for example, a deployment for any type of entity like a financial services entity. The deployment may involve providing, for example, document authentication services to the entity or identity authentication services.

It is contemplated by the present disclosure that different LLMs could be trained to analyze anomalies that may be present in different kinds of information. Examples of different kinds of information include, but are not limited to, different biometric modalities and different types of documents. Thus, different LLMs may be trained to detect anomalies in, for example, different biometric modalities or different types of documents. Different biometric modalities may include, for example, facial image data and voice data while different document types may include, for example, identity and health documents. Identity documents include, but are not limited to, driver's licenses, identity cards, and passports.

LLMs may also be trained to detect, for example, screen replays, color copies, grayscale copies, photo substitutions, text substitutions, the correct appearance of security features on an identity document, and correct biographic fields in an identity document in order to identify anomalies in received data.

In view of the above, it should be appreciated that an authentication transaction may be divided into different parts of information which may each be analyzed by a different LLM. For example, one LLM may be used to analyze the facial image data in captured image data, a different LLM may be used to analyze the voice data in captured biometric modality data, and yet another different LLM may be used to analyze a document included in captured image data. Each LLM analyzes the corresponding data and generates a result accordingly. The results may be combined into a single result for comparison against a threshold.

The results generated by a single LLM for different users may be combined and compared against a threshold to facilitate detecting anomalies in the results. The comparison may be conducted in real time, after the results for any user are generated, or may be conducted off-line at a certain time of day, for example, in the evening.

Moreover, the authentication transaction results from all of the transactions conducted on a website, for example, a financial institution website may be aggregated to determine whether or not the aggregated results for a given day deviate by an acceptable amount from a standard expected historical deviation from the aggregated results for that day over a certain period, for example, a year. Doing so enables detecting deviations from normal ranges or unusual behavior of multiple users.

The acceptable amount of deviation may be determined in any manner. For example, the acceptable amount of deviation may be determined based on a percentage value difference. For authentication transaction results, the percentage value difference may be set to, for example, twenty percent. For such a percentage, the typical number of daily authentication transaction failures should deviate from the historical daily average by no more than twenty percent. When the authentication transaction failure rate considering all the authentication transactions conducted on a given day exceeds twenty percent, such a failure rate may may be evidence of an anomaly indicative of fraud. It is contemplated by the present disclosure that the percentage value difference varies with the type of transaction.

It is contemplated by the present disclosure that the certain period may alternatively be any period including, but not limited to, a month, a week, a day or part of a day. The amount of deviation may be learned quantitively by the LLM. Such deviations may be detected anomalies indicative of fraud.

Similarly, the results from transactions conducted on different websites can be aggregated and analyzed to enable detecting deviations from normal ranges or unusual behavior of multiple users across multiple websites. To enhance security of results shared between websites, the results may be anonymized, for example, by removing personally identifiable information or by mapping personally identifiable information to anonymous identifiers. Anonymous identifiers can be, for example, any number of letters, any number of numbers, and any combination of letters and numbers.

The process of verifying the identity of a user is typically known as a verification transaction but may also be referred to as an authentication transaction. Typically, during an authentication transaction a biometric template is generated from biometric modality data of a user captured during the transaction. The generated biometric template is compared against the corresponding record biometric template of the user and a matching score is calculated for the comparison. If the matching score meets or exceeds a threshold score, the identity of the user is verified as true. Alternatively, the captured user biometric modality data may be compared against the corresponding record biometric modality data to authenticate the identity of the user.

The gyroscope 20 and the accelerometer 22 generate data regarding rotation and translation of the electronic device 10 that may be communicated to the processor 16 and the memory 18 via the bus 24. The electronic device 10 may alternatively not include the gyroscope 20 or the accelerometer 22 or may not include either.

The camera 26 captures image data. The camera 26 can be one or more imaging devices configured to record image data of at least a portion of the body of a user including any biometric modality of the user while utilizing the electronic device 10. Moreover, the camera 26 is capable of recording image data under any lighting conditions including infrared light. The camera 26 may be integrated into the electronic device 10 as one or more front-facing cameras and/or one or more rear facing cameras that each incorporates a sensor, for example and without limitation, a CCD or CMOS sensor. Alternatively, the camera 26 can be external to the electronic device 10.

The user interface 28 and the display 30 allow interaction between a user and the electronic device 10. The display 30 may include a visual display or monitor that displays information to a user. For example, the display 30 may be a Liquid Crystal Display (LCD), active matrix display, plasma display, or cathode ray tube (CRT). The user interface 28 may include a keypad, a keyboard, a mouse, an infrared illuminator, a microphone, one or more cameras, and/or speakers. The one or more cameras may be able to capture images under any lighting conditions including infrared light.

Moreover, the user interface 28 and the display 30 may be integrated into a touch screen display. Accordingly, the display may also be used to show a graphical user interface, which can display various data and provide "forms" that include fields that allow for the entry of information by the user. Touching the screen at locations corresponding to the display of a graphical user interface allows the person to interact with the device 10 to enter data, change settings, control functions, etc. Consequently, when the touch screen is touched, the user interface 28 communicates this change to the processor 16, and settings can be changed or user entered information can be captured and stored in the memory 18. The display 30 may function as an illumination source to apply illumination to a biometric modality of a user while data for the biometric modality is captured from the user.

When the user interface 28 includes an infrared illuminator and one or more cameras, the infrared illuminator may project infrared light or near infrared light on a biometric modality of a user, and the one or more cameras may detect reflections of the projected light off the biometric modality. The reflections may be off of any number of points on the biometric modality. The detected reflections may be communicated as reflection data to the processor 16 and the memory 18. The processor 16 may use the reflection data to create at least a three-dimensional model of the biometric modality and a sequence of two-dimensional digital images. For example, the reflections from at least thirty thousand discrete points on the biometric modality may be detected and used to create a three-dimensional model of the biometric modality.

The sensing device 32 may include Radio Frequency Identification (RFID) components or systems for receiving information from other devices. The sensing device 32 may alternatively, or additionally, include components with Bluetooth, Near Field Communication (NFC), infrared, or other similar capabilities. The electronic device 10 may alternatively not include the sensing device 32.

The communications interface 34 provides the electronic device 10 with two-way data communications. Moreover, the communications interface 34 enables the electronic device 10 to conduct wireless communications such as cellular telephone calls and to wirelessly access the Internet over the network 14. By way of example, the communications interface 34 may be a digital subscriber line (DSL) card or modem, an integrated services digital network (ISDN) card, a cable modem, or a telephone modem to provide a data communication connection to a corresponding type of telephone line. As another example, the communications interface 34 may be a local area network (LAN) card (e.g., for Ethemet.TM. or an Asynchronous Transfer Model (ATM) network) to provide a data communication connection to a compatible LAN. As yet another example, the communications interface 34 may be a wire or a cable connecting the electronic device 10 with a LAN, or with accessories such as, but not limited to, biometric modality data capture devices. Further, the communications interface 34 may include peripheral interface devices, such as a Universal Serial Bus (USB) interface, a PCMCIA (Personal Computer Memory Card International Association) interface, and the like. Thus, it should be understood the communications interface 34 may enable the electronic device 10 to conduct any type of wireless or wired communications such as, but not limited to, accessing the Internet. Although the electronic device 10 includes a single communications interface 34, the electronic device 10 may alternatively include multiple communications interfaces 34.

The communications interface 34 also allows the exchange of information across the network 14. The exchange of information may involve the transmission of radio frequency (RF) signals through an antenna (not shown). Moreover, the exchange of information may be between the electronic device 10 and any other computer systems (not shown) and any other electronic devices (not shown) capable of communicating over the network 14. The computer systems (not shown) and the electronic devices (not shown) typically include components similar to the components included in the electronic device 10.

The network 14 may be a 5G communications network. Alternatively, the network 14 may be any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 14 may also be any type of wired network or a combination of wired and wireless networks.

Examples of other computer systems (not shown) include computer systems of service providers such as, but not limited to, financial institutions, medical facilities, national security agencies, merchants, and authenticators. Examples of other electronic devices (not shown) include, but are not limited to, smart phones, tablet computers, phablet computers, laptop computers, personal computers and cellular phones. The other electronic devices (not shown) may be associated with any individual or with any type of entity including, but not limited to, commercial and non-commercial entities. The electronic devices may alternatively be referred to as computer systems or information systems, while the computer systems (not shown) may alternatively be referred to as electronic devices or information systems.

The server 12 includes most of the same components as described herein for the electronic device 10. However, because the server 12 is primarily stationary, not primarily mobile, the server 12 may not include the gyroscope 20 and/or the accelerometer 22.

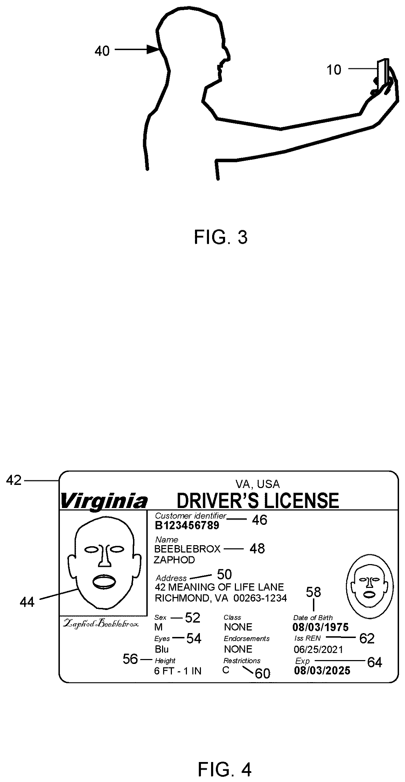

Figure 3 is a side view of a person 40 operating an example electronic device 10 to capture data of a biometric modality of his or herself. The person 40 is referred to herein as a user 40. The user 40 typically operates the electronic device 10 during capture. However, a different person may operate the electronic device 10 while the electronic device 10 captures data of a biometric modality of the user 40. Captured biometric modality data may be stored in the memory 18.

Figure 4 is a diagram illustrating an image of an example identity document 42. A first side of the identity document 42 is shown. The example identity document 42 is a driver's license. However, it is contemplated by the present disclosure that the identity document 42 may alternatively be any identity document used by a person to prove a claim of identity, for example, a passport or an identification card. The image may be captured with the electronic device 10 or any other device included in the system 100 capable of communicating with the server 12 via the network 14.

The identity document 42 includes an image 44 of the person to whom the identity document was issued and other information about the person. The other information includes a customer identifier 46 as well as the person's name 48, address 50, sex 52, eye color 54, height 56, and date of birth 58. Additionally, the identity document 42 includes restrictions 60 the person is required to comply with while driving, the issue renewal date 62, and the expiration date 64. Any textual information included on the first side of the identity document 42 may be obtained from the image using optical character recognition (OCR) techniques.

While remotely opening an account with a service provider, service providers typically require individuals to upload an image of his or herself, an image of his or her identity document, for example, a driver's license or a passport, and a claim of identity to facilitate authentication. The uploaded identity document images are typically analyzed to determine whether the identity document in the uploaded image is authentic, jurisdictionally accurate, and unexpired. If so, typically the facial image from the identity document may be compared against the uploaded image to determine whether the two images adequately match. Upon determining an adequate match, the identity of the individual is verified as true. Such a process involving biometrically authenticating a user while remotely opening an account can be an example of onboarding.

Metadata is text information that is associated with data, which data can be, for example, captured biometric modality data or an image of the identity document 42. Items of metadata may be embedded in the biometric modality data or in the identity document image or may be saved to a separate data file that is associated with the captured biometric modality data or identity document image data, respectively. The items of metadata include details relevant to the captured biometric modality data itself, to the identity document image, and to the production of each.

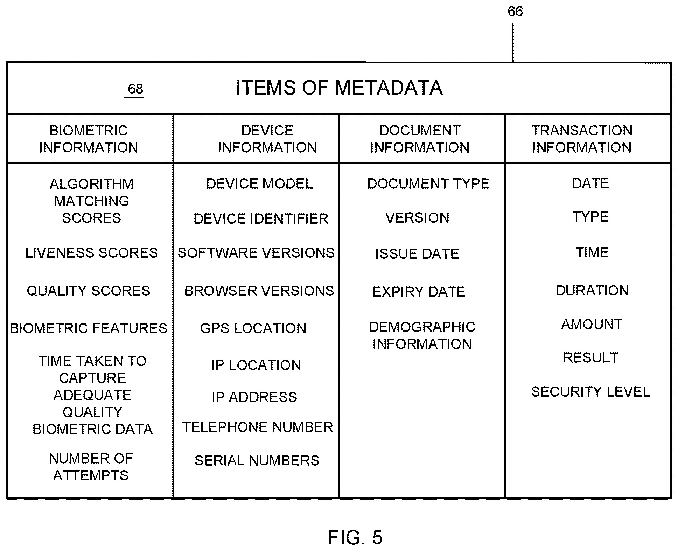

Figure 5 is a diagram illustrating a table 66 including example items of metadata 68. The items of metadata 68 are divided into four example types of information: biometric information, device information, document information, and transaction information. Each of these types of items of metadata may be relevant to an authentication transaction.

Biometric information includes items of metadata that pertain to captured biometric modality data, for example, matching scores, and liveness scores and quality scores calculated using captured biometric modality data. Additional example items of metadata that pertain to captured biometric modality data include, but are not limited to, features included in captured biometric modality data, the time taken to capture adequate quality biometric modality data, and the number of attempts made by the user to capture biometric modality data of adequate quality for generating reliable and trustworthy authentication transaction results.

Device information includes items of metadata that pertain to the device used to capture the biometric modality data, for example, the model of the device, the device identifier, the software versions operated by the device, the browser versions operated by the device, the Global Positioning System (G.P.S.) coordinate location of the device during authentication transactions, Internet Protocol (I.P.) location of the device during authentication transactions, I.P. address of the device, the telephone number of the device, and unique serial numbers associated with the device. For the methods and systems described herein, the device may be, for example, the electronic device 10. The G.P.S. coordinate location of the device is referred to herein as location metadata.

Document information includes items of metadata that pertain to, for example, an identity document image. Example items of metadata that pertain to such a document image include, but are not limited to, the document type, the version of the identity document, the issue date of the identity document, the expiry date of the identity document, and demographic information about the individual to whom the identity document was issued.

The information required to be in an identity document, for example, a driver's license periodically changes. The information required may change, for example, every three or four years. As described herein, each changed identity document constitutes a new version. The demographic information can include, but is not limited to, the name, eye color, height, and weight of the person to whom the identity document was issued.

Transaction information includes items of metadata that pertain to circumstances of an authentication transaction. Example items of metadata that pertain to authentication transactions include, but are not limited to, the date of the transaction, the type of transaction, the time of the transaction, the duration of the transaction, the amount of the transaction if the transaction involves, for example, a purchase, the result of the transaction, and the security level of the transaction.

Although twenty-six items of metadata are included in the table 66, it is contemplated by the present disclosure that any number of items of metadata may alternatively be included in the table 66. The items of metadata may be different than those shown in the table 66. The table 66 may include any items of metadata that facilitate enhancing detection of fraudulent authentication transactions as described herein.

Two items of metadata can be compared against each other and a difference calculated between them. An item of metadata captured during, for example, an authentication transaction can be compared against corresponding record metadata obtained during a different authentication transaction and the difference between the two items of metadata can be calculated.

Location data is an example item of metadata that may indicate where a transaction, for example, an authentication transaction occurred. The differences in location metadata for many authentication transactions can be used to create a distribution of the differences. The distribution may be used to determine whether an item of metadata is within an expected range.

It is contemplated by the present disclosure that an expected range could be a percentile within such a distribution. For example, ninety percent (90%) of the differences in location metadata for a specific user might be less than fifty kilometers. Thus, the expected range could be, for example, up to fifty kilometers which corresponds to the ninetieth (90^{th}) percentile of the distribution. If, for example, an authentication transaction occurred at a location that corresponds to a two hundred kilometer difference in location metadata, the metadata can be considered to be outside the expected range. However, if an authentication transaction occurred at a location that corresponds to, for example, a forty-eight kilometer difference in location metadata, the metadata could be considered to be within the expected range.

During authentication transactions, people provide a claim of identity and remotely captured biometric modality data. Imposters have been known to impersonate people by providing a false claim of identity supported by fraudulent biometric modality data to deceive an entity into concluding the imposter is the person he or she claims to be. For example, imposters have been known to use artificial intelligence (AI) and deep fake technologies to generate fraudulent biometric modality data, for example, synthetic speech, videos and other image data that can be difficult to distinguish from genuine human biometric modality data. As a result, fraudulent biometric data may be a threat to security systems that use biometric modality data to authenticate or verify the identities of people. For example, fraudulent biometric modality data may increase the risks of successfully perpetuating identity fraud on people and institutions and increase the risk of unauthorized access to confidential information stored on computer systems as well as the computer systems themselves.

Unfortunately, security systems have been known to fail to identify fraudulent biometric modality data, for example, synthetic speech in voice digital streams and recordings and image data. Consequently, there is a need for more advanced detection mechanisms that can analyze biometric modality data to enhance the detection of fraudulent biometric modality data and thus transactions dependent upon such fraudulent biometric modality data.

To address these problems, the electronic device 10 may capture data of a biometric modality of a user while conducting an authentication transaction and can generate items of metadata as a result of conducting the authentication transaction. The similarity may be determined between each item of metadata and corresponding record items of metadata associated with of the user. A determination may be made regarding whether the items of metadata are within a first expected range.

When the items of metadata are within the first expected range, the similarity can be determined between each item of metadata and corresponding record items of metadata associated with fraudulent authentication transactions. A determination can be made regarding whether the items of metadata are outside a second expected range. When the items of metadata are outside the second expected range, the authentication transaction can be determined to be fraudulent.

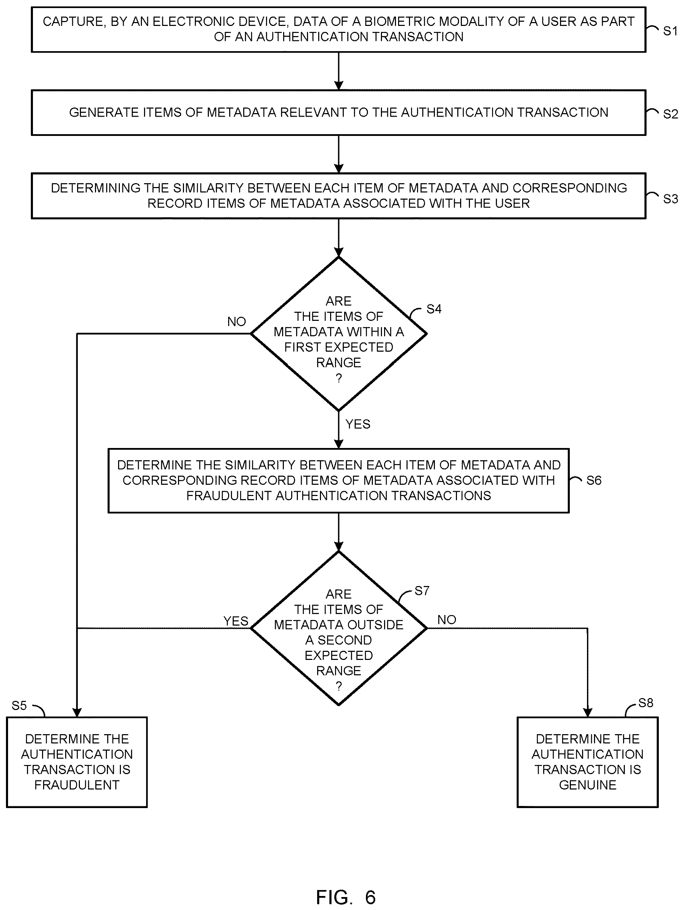

Figure 6 is a flowchart illustrating an example method and algorithm for enhancing detection of fraudulent authentication transactions according to an embodiment of the present disclosure. A user may be required to prove his or her identity before being permitted to conduct, using the electronic device 10, a desired network-based transaction. Such network-based transactions include, but are not limited to, buying merchandise from a merchant service provider website, accessing top secret information from a computer system, and opening an account at a financial institution. Figure 6 illustrates example steps performed when the electronic device 10 runs software 38 stored in the memory 18 to enhance detection of fraudulent authentication transactions.

In step S1, the software 38 executed by the processor 16 causes the electronic device 10 to capture data of a biometric modality of a user as part of an authentication transaction. The software 38 includes at least one trained large language model (LLM) run or operated by the electronic device 10. In step S2, the software 38 executed by the processor 16 cause the electronic device 10 to generate items of metadata relevant to the authentication transaction. The items of metadata include, but are not limited to, biometric information, device information, and transaction information as described herein with regard to Figure 5. The items of metadata may be stored in the electronic device 10 or the server 12.

In step S3, the software 38 executed by the processor 16 can cause the electronic device 10 to determine the similarity between each item of metadata and corresponding record items of metadata associated with the user. For example, the software 38 executed by the processor 16 can cause the electronic device 10 to compare each item of metadata against corresponding record items of metadata associated with the user, to calculate a similarity score for each comparison, and to calculate a combined similarity score by combining the similarity scores. The similarity scores may be combined in any manner, for example, by adding.

The similarity scores may constitute a set of similarity scores and can be normalized to be within a desired range, for example, between zero and one. The combined similarity score can represent the similarity between the items of metadata and record items of metadata associated with the user.

It is contemplated by the present disclosure that the software 38, including the trained LLM, may alternatively cause the electronic device 10 to determine the similarity between the items of metadata and corresponding record items of metadata associated with the user using any method resulting from capabilities instilled in the LLM as a result of training.

Each item of metadata may be assigned a different weight. For example, items of metadata considered more important may be assigned larger weights while those considered less important may be assigned lower weights. The weights may be, for example, between zero and one, where one represents a larger weight and zero represents a lower weight. Each similarity score may be assigned the same weight as the items of metadata from which it is calculated prior to calculating the combined similarity score.

The record biometric modality data of the user may have been captured during, for example, previous authentication transactions involving the user. The corresponding record biometric modality data may constitute a set of biometric modality data.

Trained large language models (LLM) facilitate identifying patterns and statistical irregularities in text. Thus, encoding the items of metadata and analyzing the encoded items of metadata with an LLM facilitates detecting deviations in the encoded text which facilitates detecting fraudulent authentication data. Consequently, it is contemplated by the present disclosure that the items of metadata may be encoded as text before the similarity scores are calculated.

Next, in step S4, the software 38 executed by the processor 16 can cause the electronic device 10 to determine whether the items of metadata are within a first expected range. For example, the software 38 executed by the processor 16 can cause the electronic device 10 to compare the combined similarity score against a first threshold value.

In response to determining the combined similarity score fails to satisfy the first threshold value, the software 38 executed by the processor 16 can cause the electronic device 10 to determine the items of metadata are outside the first expected range, which indicates there is a strong possibility that at least some of the items of metadata are fraudulent. As a result, in step S5, the software 38 executed by the processor 16 can cause the electronic device 10 to determine that the authentication transaction is fraudulent. However, when the combined similarity score satisfies the first threshold value, the other software 38 executed by the processor 16 can cause the electronic device 10 to determine that the items of metadata are within the first expected range, which indicates there is a strong possibility that the items of metadata are genuine.

Next, in step S6, the software 38 executed by the processor 16 can cause the electronic device 10 to determine the similarity between each item of metadata and corresponding record items of metadata associated with fraudulent authentication transactions. For example, the software 38 executed by the processor 16 can cause the electronic device 10 to compare each item of metadata against corresponding record items of metadata associated with fraudulent authentication transactions, to calculate a similarity score for each comparison, and to calculate a total similarity score. The total similarity score may be calculated in any manner, for example, by combining the similarity scores. The similarity scores may be combined in any manner, for example, by summing the similarity scores.

The similarity scores may constitute a set of similarity scores that can be normalized to be within a desired range, for example, between zero and one. Each similarity score may be assigned the same weight as the items of metadata from which it was calculated prior to calculating the total similarity score.

It is contemplated by the present disclosure that the software 38, including the trained LLM may alternatively cause the electronic device 10 to determine the similarity between each item of metadata and corresponding record items of metadata associated with fraudulent authentication transactions using any method resulting from capabilities instilled in the LLM as a result of training.

Next, in step S7, the software 38 executed by the processor 16 can cause the electronic device 10 to determine whether the items of metadata are outside a second expected range. For example, the software 38 executed by the processor 16 can cause the electronic device 10 to compare the total similarity score against a second threshold value. The second expected range is different than the first expected range because the items of metadata are compared against different record data.

When the total similarity score fails to satisfy the second threshold value, the items of metadata are inside the second expected range, which indicates there is a strong possibility that the items of metadata are genuine. As a result, in step S8, the software 38 executed by the processor 16 can cause the electronic device 10 to determine the authentication transaction is genuine. As a result, the desired network-based transaction can be conducted.

However, when the total similarity score satisfies the second threshold value, the items of metadata are considered to be outside the second expected range, which indicates there is a strong possibility that at least some of the items of metadata are fraudulent. Next, in step S5, the software 38 executed by the processor 16 can cause the electronic device 10 to determine that the authentication transaction is fraudulent. As a result, the desired network-based transaction cannot be conducted.

The first threshold value may be satisfied when the combined similarity score is greater than or equal to the first threshold value. Other threshold values may be satisfied when the combined similarity score is equal to or less than the first threshold value. Alternatively, the first threshold value may include multiple threshold values, each of which is required to be satisfied to satisfy the first threshold value.

The second threshold value may be satisfied when the total similarity score is less than or equal to the second threshold value. Other threshold values may be satisfied when the total similarity score is equal to or greater than the second threshold value. Alternatively, the second threshold value may include multiple threshold values, each of which is required to be satisfied to satisfy the second threshold value.

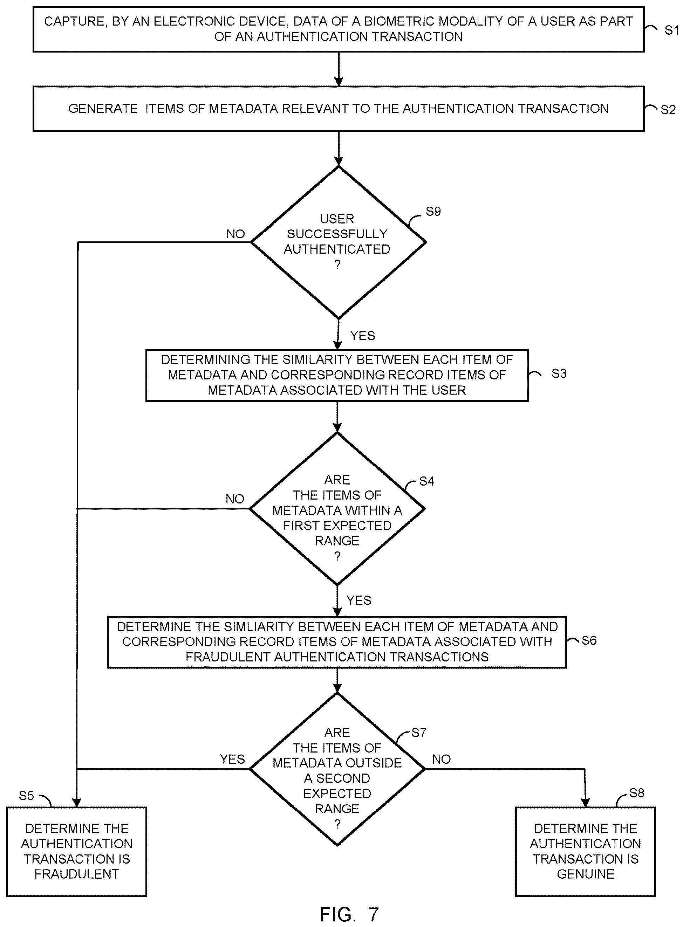

The information shown in Figure 7 includes some of the same information shown in Figure 6 as described in more detail below. As such, features illustrated in Figure 7 that are identical to features illustrated in Figure 6 are identified using the same reference numerals used in Figure 6.

Figure 7 is a flowchart illustrating another example method and algorithm for enhancing detection of fraudulent authentication transactions according to an embodiment of the present disclosure. This method is similar to that shown in Figure 6. However, after generating, in step S2, the items of metadata, in step S9, the software 38 executed by the processor 16 can cause the electronic device 10 to conduct a biometric authentication transaction using the captured biometric modality data. More specifically, a biometric template may be created from the captured biometric modality data and compared against the corresponding record biometric template of the user. A matching score can be calculated for the comparison. If the matching score meets or exceeds an authentication threshold score, the identity of the user is verified as true so the user is successfully authenticated and the biometric authentication transaction is successful.

After successfully biometrically authenticating the user, in step S3, the software 38 executed by the processor 16 can cause the electronic device 10 to determine the similarity between each item of metadata and corresponding record items of metadata associated with the user. However, when the identity of the user is not verified as true the user is not successfully authenticated. As a result, in step S5, the software 38 executed by the processor 16 can cause the electronic device 16 to determine that the authentication transaction is fraudulent.

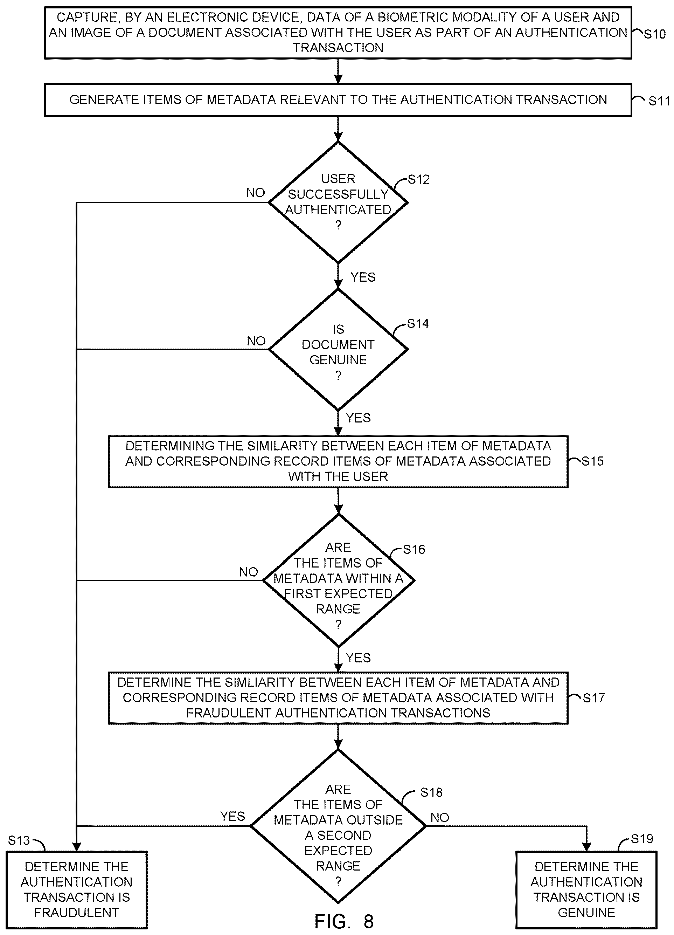

Figure 8 is a flowchart illustrating an example method and algorithm for enhancing detection of fraudulent authentication transactions while onboarding a user according to an embodiment of the present disclosure. A user may be required to prove his or her identity, for example, while remotely enrolling in a service offered by a service provider or remotely opening an account at a financial institution. Such remote enrollments and/or transactions are examples of onboarding. Figure 8 illustrates example steps performed when the electronic device 10 runs software 38 stored in the memory 18 to enhance detection of fraudulent authentication transactions while onboarding a user.

In step S10, the software 38 executed by the processor 16 causes the electronic device 10 to capture data of a biometric modality of a user and an image of an identity document associated with the user as part of an authentication transaction. The software 38 includes at least one trained large language model (LLM) run or operated by the electronic device 10.

In step S11, the software 38 executed by the processor 16 causes the electronic device 10 to generate items of metadata relevant to the authentication transaction. For example, items of metadata may be generated for the biometric modality data and the image data. For the biometric modality data, the items of metadata include, but are not limited to, biometric information, device information, and transaction information as described herein with regard to Figure 5. For the identity document image, the items of metadata include, but are not limited to, document information as described herein with regard to Figure 5.

The identity document may be any identity document used by a person to prove a claim of identity, for example, a driver's license, a passport or an identification card. The identity document may include a facial image of the user.

In step S12, the software 38 executed by the processor 16 can cause the electronic device 10 to conduct a biometric authentication transaction using the captured biometric modality data and the facial image from the identity document image. For example, a first biometric template may be created from the captured biometric modality data and a second biometric template may be created from the facial image in the identity document image. The first and second templates can be compared against each other and a matching score can be calculated for the comparison. If the matching score fails to satisfy the authentication threshold score, the identity of the user is not verified as true so the user is not successfully authenticated and the authentication transaction is unsuccessful. Thus, the captured biometric modality data is fraudulent. As a result, the onboarding transaction is also fraudulent. Thus, in step S13, the software 38 executed by the processor 16 can cause the electronic device 10 to determine that the authentication transaction and thus the onboarding transaction are fraudulent.

However, when the matching score satisfies the authentication threshold score, the identity of the user is verified as true so the user is successfully authenticated and the biometric authentication transaction is successful. As a result, in step S14, the software 38 executed by the processor 16 can cause the electronic device 10 to determine whether the document in the captured image is genuine, for example, by checking the captured identity document image for screen replays, color copies, greyscale copies, photo substitutions, text substitutions, correct appearance of document security features, and correct biographic fields.

If it is determined that the document is not genuine, in step S13, the software 38 executed by the processor 16 can cause the electronic device 10 to determine that the authentication transaction is fraudulent and that as a result the onboarding transaction is also fraudulent.

However, when the document is determined to be genuine, in step S15, the software 38 executed by the processor 16 can cause the electronic device 10 to determine the similarity between each item of metadata and corresponding record items of metadata associated with the user. For example, the software 38 executed by the processor 16 can cause the electronic device 10 to compare each item of metadata against corresponding record items of metadata stored, for example, in the memory 18.

A similarity score can be calculated for each comparison and a combined similarity score can be calculated. The combined similarity score can be calculated by combining the similarity scores in any manner, for example, by summing the similarity scores. The similarity scores may constitute a set of similarity scores. The similarity scores can be normalized to be within a desired range, for example, between zero and one.

It is contemplated by the present disclosure that the software 38, including the trained LLM may alternatively cause the electronic device 10 to determine the similarity between each item of metadata and corresponding record items of metadata using any method resulting from capabilities instilled in the LLM as a result of training.

Next, in step S16, the software 38 executed by the processor 16 can cause the electronic device 10 to determine whether the items of metadata are within a first expected range. For example, the software 38 executed by the processor 16 can cause the electronic device 10 to compare the combined similarity score against the first threshold value.

When the combined similarity score fails to satisfy the first threshold value, the software 38 executed by the processor 16 can cause the electronic device 10 to determine the items of metadata are outside the first expected range, which indicates there is a strong possibility that at least some of the items of metadata data are fraudulent. As a result, in step S13, the software 38 executed by the processor 16 can cause the electronic device 10 to determine that the authentication transaction is fraudulent and thus, that the onboarding transaction is also fraudulent.

However, when the items of metadata satisfy the first threshold value, the items of metadata are within the first expected range. Next, in step S17, the software 38 executed by the processor 16 can cause the electronic device 10 to determine the similarity between the items of metadata and corresponding record items of metadata associated with fraudulent authentication transactions. For example, the software 38 executed by the processor 16 can cause the electronic device 10 to compare each item of metadata against corresponding record items of metadata associated with record fraudulent authentication transactions. A similarity score can be calculated for each comparison and the similarity scores can be combined to calculate a total similarity score. The similarity scores may be combined in any manner to calculate the total similarity score, for example, by summing.

The similarity scores may constitute a set of similarity scores and can be normalized to be within a desired range, for example, between zero and one. Each similarity score may be assigned the same weight as the items of metadata from which it was calculated prior to calculating the total similarity score.

It is contemplated by the present disclosure that the software 38, including the trained LLM may alternatively cause the electronic device 10 to determine the similarity between each item of metadata and corresponding items of metadata associated with record fraudulent authentication transactions using any method resulting from capabilities instilled in the LLM as a result of training.

Next, in step S18, the software 38 executed by the processor 16 can cause the electronic device 10 to determine whether the items of metadata are outside a second expected range. For example, the software 38 executed by the processor 16 can cause the electronic device 10 to compare the total similarity score against a second threshold value.

When the total similarity score satisfies the second threshold value, the items of metadata are considered to be outside the second expected range, which indicates there is a strong possibility that the items of metadata contain at least one fraudulent item of metadata so are likely fraudulent. Next, in step S13, the software 38 executed by the processor 16 can cause the electronic device 10 to determine that the authentication transaction is fraudulent and thus that the onboarding transaction is also fraudulent. However, when the total similarity score fails to satisfy the second threshold value, the software 38 executed by the processor 16 can cause the electronic device 10 to determine that the items of metadata are not outside the second expected range, which indicates there is a strong possibility that the items of metadata are likely genuine. As a result, in step S19, the software 38 executed by the processor 16 can cause the electronic device 10 to determine the authentication transaction is genuine and thus, that the onboarding transaction is also genuine.

Although the biometric authentication transactions as described herein are conducted using biometric templates, it is contemplated by the present disclosure that the received user biometric modality data, record biometric modality data of the user, and the identity document facial image may alternatively be used to conduct the authentication transaction.

It is contemplated by the present disclosure that the functions described herein as being performed by the software 38, including the trained LLM, run on the electronic device 10 may be performed using any method resulting from capabilities instilled in the trained LLM as a result of training.

The methods and algorithms for enhancing detection of fraudulent authentication transactions described herein use artificial intelligence techniques to facilitate detecting anomalies in items of metadata that may be indicative of fraud to thus reduce the risks that identity fraud will be successfully perpetuated. Moreover, using the methods and algorithms for enhancing detection of fraudulent authentication transactions facilitates reducing the risks of unauthorized access to confidential information.

The example methods described herein may be conducted entirely by the electronic device 10, or partly on the server 12 and partly on other electronic devices (not shown) and computer systems (not shown) operable to communicate with the electronic device 10 over the network 14. Moreover, the example methods described herein may be conducted entirely on the other computer systems (not shown) and other electronic devices (not shown). Thus, it is contemplated by the present disclosure that the example methods may be conducted on any combination of computers, computer systems (not shown), and electronic devices. Furthermore, data described herein as being stored in the memory 18 may alternatively be stored in any computer system (not shown) or electronic device operable to communicate with the electronic device 10 over the network 14. Additionally, the example methods described herein may be implemented with any number and organization of computer program components. Thus, the methods described herein are not limited to specific computer-executable instructions. Alternative example methods may include different computer-executable instructions or components having more or less functionality than described herein.

The example methods for enhancing detection of fraudulent authentication transactions described above should not be considered to imply a fixed order for performing the method steps. Rather, the method steps may be performed in any order that is practicable, including simultaneous performance of at least some steps. Moreover, the method steps may be performed in real time or in near real time. For any process described herein, there can be additional, fewer, or alternative steps performed in similar or alternative orders, or in parallel, within the scope of the various embodiments, unless otherwise stated. Furthermore, the invention is not limited to the embodiments of the methods described above in detail. Rather, other variations of the methods may be utilized within the spirit and scope of the claims.

## Claims

1. A method for enhancing the detection of fraudulent authentication transactions comprising the steps of:
capturing, by an electronic device operating at least one trained large language model, data of a biometric modality of a user as part of an authentication transaction;
generating items of metadata relevant to the authentication transaction;
determining the similarity between each item of metadata and corresponding record items of metadata associated with the user; determining whether the items of metadata are within a first expected range;
in response to determining the items of metadata are within the first expected range, determining the similarity between each item of metadata and corresponding record items of metadata associated with fraudulent authentication transactions;
determining whether the items of metadata are outside a second expected range; and
in response to determining the items of metadata are outside the second expected range, determining the authentication transaction is fraudulent.

2. The method according to claim 1, said step of determining the similarity between each item of metadata and corresponding record items of metadata associated with the user comprising comparing each item of metadata against corresponding record items of metadata associated with the user.

3. The method according to claim 2, said step of determining whether the items of metadata are within the first expected range comprising:
calculating a similarity score for each comparison;
combining the similarity scores to create a combined similarity score;
comparing the combined similarity score against a first threshold value; and
in response to determining the combined similarity score satisfies the first threshold value, determining that the items of metadata are within the first expected range.

4. The method according to any preceding claim, said step of determining the similarity between each item of metadata and corresponding record items of metadata associated with fraudulent authentication transactions comprises comparing each item of metadata against corresponding record items of metadata associated with fraudulent authentication transactions.

5. The method according to claim 4, said step of determining whether the items of metadata are outside the second expected range comprising:
calculating a similarity score for each comparison;
combining the similarity scores to create a total similarity score;
comparing the total similarity score against a second threshold value; and
in response to determining the total similarity score satisfies the second threshold value, determining that the items of metadata are outside the second expected range.

6. The method according to any preceding claim, further comprising:
capturing, by the electronic device, an image of a document associated with the user as part of the authentication transaction, the document including a facial image of the user;
generating items of metadata for the document image;
conducting a biometric authentication transaction based on the facial image; and
in response to successfully biometrically authenticating the user, determining whether the document in the image is genuine.

7. An electronic device for enhancing the detection of fraudulent authentication transactions comprising:
a processor; and
a memory configured to store data, said electronic device being associated with a network and said memory being in communication with said processor and having instructions stored thereon including at least one large language model which, when read and executed by said processor, cause said electronic device to:
capture data of a biometric modality of a user as part of an authentication transaction;
generate items of metadata relevant to the authentication transaction;
determine the similarity between each item of metadata and corresponding record items of metadata associated with the user;
determine whether the items of metadata are within a first expected range;
in response to determining the items of metadata are within the first expected range, determine the similarity between each item of metadata and corresponding record items of metadata associated with fraudulent authentication transactions;
determine whether the items of metadata are outside a second expected range; and
in response to determining the items of metadata are outside the second expected range, determine the authentication transaction is fraudulent.

8. The electronic device according to claim 7, wherein the instructions when read and executed by said processor, cause said electronic device to compare each item of metadata against corresponding record items of metadata associated with the user.

9. The electronic device according to claim 8, wherein the instructions when read and executed by said processor, further cause said electronic device to:
calculate a similarity score for each comparison;
combine the similarity scores to create a combined similarity score;
compare the combined similarity score against a first threshold value; and
in response to determining the composite similarity score satisfies the first threshold value, determine the items of metadata are within the first expected range.

10. The electronic device according to any one of claims 7 to 9, wherein the instructions when read and executed by said processor, further cause said electronic device to compare each item of metadata against corresponding record items of metadata associated with fraudulent authentication transactions.

11. The electronic device according to claim 10, wherein the instructions when read and executed by said processor, further cause said electronic device to:
calculate a similarity score for each comparison;
combine the similarity scores to create a total similarity score;
compare the total similarity score against a second threshold value; and
in response to determining the total similarity score satisfies the second threshold value, determine that the items of metadata are outside the second expected range.

12. The electronic device according to any one of claims 7 to 11, wherein the instructions when read and executed by said processor, further cause said electronic device to:
capture an image of a document associated with the user as part of the authentication transaction, the document including a facial image of the user;
generate items of metadata for the document image;
conduct a biometric authentication transaction based on the facial image; and
in response to successfully biometrically authenticating the user, determine whether the document in the image is genuine.

13. A computer program for enhancing the detection of fraudulent authentication transactions, the computer program when executed by a hardware processor, being configured to carry out the method of any one of claims 1 to 6.
